# EUROPÄISCHE PATENTSCHRIFT

(11) **EP 3 283 579 B1**
(45) Veröffentlichungstag und Bekanntmachung des Hinweises auf die Patenterteilung: **19.09.2018**
(21) Anmeldenummer: 16720364.5
(22) Anmeldetag: 14.04.2016
(51) Int. Cl.: C09D 5/08, F16L 58/10, B32B 7/12, B32B 25/04, B32B 25/08, B32B 25/16, B32B 25/18, B32B 27/16, B32B 27/32, B32B 1/08, B32B 25/14

(54) **KORROSIONSSCHUTZSYSTEM UMFASSEND EIN MINDESTENS EINLAGIGES ERSTES BAND UND MINDESTENS EIN VORANSTRICHMITTEL**
ANTI-CORROSION SYSTEM COMPRISING AN AT LEAST SINGLE-PLY FIRST STRIP AND AT LEAST ONE PREPAINT MEANS
SYSTÈME ANTI-CORROSION COMPRENANT UNE PREMIÈRE BANDE AU MOINS MONOCOUCHE ET AU MOINS UNE COUCHE D'APPRÊT

(30) Priorität: 15.04.2015 DE 102015105747
(43) Veröffentlichungstag der Anmeldung: 21.02.2018
(73) Patentinhaber: DENSO-Holding GmbH & Co., 51371 Leverkusen (DE)
(72) Erfinder: KAISER, Thomas, Markus, 52459 Inden (DE); GRYSHCHUK, Oleg, 51381 Leverkusen (DE)
(74) Vertreter: Geskes, Christoph
(86) Internationale Anmeldenummer: PCT/EP2016/058301
(87) Internationale Veröffentlichungsnummer: WO 2016/166261

(56) Entgegenhaltungen:
- EP-A2- 0 232 936
- WO-A1-93/03097
- AT-A1- 507 508
- US-A- 3 063 891
- US-A- 4 200 706
- US-A- 4 806 400
- US-A- 5 888 331
- DATABASE WPI Week 198307 Thomson Scientific, London, GB; AN 1983-16368K XP002758490, -& JP S58 3827 A (FURUKAWA ELECTRIC CO LTD) 10. Januar 1983 (1983-01-10)

## Beschreibung

Die vorliegende Erfindung betrifft ein Korrosionsschutzsystem umfassend ein mindestens vierlagiges erstes Band, umfassend mindestens ein Elastomer ausgewählt aus einer Gruppe umfassend (Block-)Co- und/oder Terpolymere mit mindestens einer Kohlenstoff-Kohlenstoff-Doppelbindung, als auch ein Verfahren zum Schutz von Produkten vor Korrosion mittels des erfindungsgemäßen Korrosionsschutzsystems.

Korrosionsschutzsysteme beispielsweise für Rohranlagen wie Pipelines, aber auch technische Anlagen etc., sind vielfältig aus dem Stand der Technik bekannt. So offenbart beispielsweise die EP 0 421 607 B1 ein Bandumwicklungssystem zum Schutz von rohrförmigen Gegenständen, das eine Innenumwicklung, die die Oberfläche des zu schützenden Gegenstandes bedeckt, und eine über der Innenumwicklung angeordnete Außenumwicklung umfasst, wobei die Innenumwicklung eine stoßfeste Schicht mit einer Klebeschicht auf ihrer inneren Oberfläche und eine Schicht auf ihrer äußeren Oberfläche umfasst, und wobei die Außenumwicklung eine Trägerschicht mit einer Schicht auf mindestens einer ihrer Oberflächen umfasst, wobei die Innenumwicklung und die Außenumwicklung warm verschmelzbares Material einschließen und wobei das Bandumwicklungssystem auf den rohrförmigen Gegenstand so aufgebracht wird, dass bei Erwärmen und Abkühlen die Außenumwicklung mit der Innenumwicklung warm verschmolzen wird, wodurch eine vollständig geschlossene schützende Beschichtung gebildet wird. Durch das dort offenbarte Bandumhüllungssystem soll die Aufgabe gelöst werden, eine Verbesserung gegenüber zerstörerischen äußeren Kräften herzuführen, indem ein kontinuierliches, nahtloses, schützendes Bandbeschichtungssystem zur Verfügung gestellt wird. Eine der Klebstoffschichten kann dabei beispielsweise aus Butylkautschuk hergestellt sein. Als warm schmelzbares Material werden beispielsweise Ethylenvinylacetat, Ethylenmethylacrylat und Polyethylen niedriger Dichte eingesetzt. Problematisch an dem in EP 0 421 607 B1 offenbarten Bandumhüllungssystem ist gerade bei höheren Temperaturen bei umhüllten Rohrsystemen oder technischen Anlagen gleich welcher Art der Kontakt zwischen beispielsweise der Außenseite eines Pipelinerohres mit der Klebstoffschicht, beispielsweise aus Butylkautschuk, die sich von der Außenseite des Pipelinerohres lösen kann.

EP 0 232 936 A2 offenbart eine Korrosionsschutzbeschichtung für metallischen Oberflächen umfassend eine kautschukbasierte Primer-Beschichtungszusammensetzung und ein Klebeband umfassend eine Unterstützung, die eine kautschukbasierte Klebebeschichtung trägt, diese umfassend eine Mischung eines vorvernetzten Butylkautschuks und Originalkautschuk allein oder in Kombination mit wieder aufbereitetem Kautschuk, oder eine Mischung eines Originalkautschuks und/oder halogeniertem Butylkautschuks allein oder in Mischung zusammen mit wieder aufbereitetem Kautschuk, wobei der Original und/oder halogenierte Butylkautschuk teilweise durch ein Vernetzungsmittel auf Phenolharzbasis vernetzt ist, wobei das System weiterhin einen die Vernetzung fördernden Aktivator aufweist, der geeignet ist, eine In Situ Vernetzung des Systems nach der Beschichtung mit dem Primer und der Anordnung des Bandes zur Verfügung zu stellen.

US 3,063,891 offenbart ein Verfahren zur Anbringung eines flächigen flexiblen Schutzes auf einer festen Oberfläche umfassend Beschichtung der festen Oberfläche mit einer Primer-Beschichtung umfassend einen Vulkanisierungsinitiator und einen Katalysator für die Polymerisation von Phenolharz, Beschichtung des flexiblen flächigen Schutzes mit einer drucksensitiven Klebemasse umfassend unvollständig vulkanisierten Kautschuk, unvollständig polymerisiertes Phenolharz und Schwefel, anschließendes Anordnen der beschichteten Fläche auf der mit dem Primer beschichteten festen Oberfläche.

Es ist Aufgabe der vorliegenden Erfindung, ein Korrosionsschutzsystem zur Verfügung zu stellen, welches auch bei hohen Temperaturen, die in dem zu schützenden Produkt, beispielsweise einem Rohrsystem wie einer Pipeline oder einer technischen Anlage, gleich welcher Art, herrschen, eine hinreichend gute Haftung mit einer Außenfläche des Produktes zur Verfügung zu stellen, wobei das Korrosionsschutzsystem eine gute Lagerfähigkeit aufweisen soll.

Diese Aufgabe wird gelöst durch ein, insbesondere kalt applizierbares, Korrosionsschutzsystem umfassend ein mindestens vierlagiges erstes Band, umfassend mindestens eine äußere Lage mindestens eines Elastomers ausgewählt aus einer Gruppe umfassend (Block)Co- und/oder Terpolymere mit mindestens einer Kohlenstoff-Kohlenstoff-Doppelbindung, als auch mindestens ein Vernetzungsmittel, ausgewählt aus einer Gruppe umfassend mindestens ein Reaktionsharz, weiterhin umfassend mindestens eine Lage einer Trägerfolie, die auf beiden Seiten eine Haftvermittlungsschicht aufweist, wobei zwischen elastomerhaltiger Lage und der Trägerfolie mindestens eine Haftvermittlungsschicht angeordnet ist, wobei nur auf einer Seite der Trägerfolie die mindestens eine elastomerhaltige Lage angeordnet ist, wobei das Korrosionsschutzsystem weiterhin umfasst mindestens ein Voranstrichmittel, umfassend mindestens ein Katalysatormittel zur Aktivierung des Vernetzungsmittels. Das erfindungsgemäße Korrosionsschutzsystem funktioniert derart, dass das Vernetzungsmittel im mindestens vierlagigen ersten Band erst nach Kontakt mit dem Katalysatormittel des mindestens einen Voranstrichmittels eine Vernetzungsreaktion mit dem mindestens einen Elastomeren in Gang setzt. Vorher findet keine Vernetzungsreaktion statt, insbesondere liegt das Elastomer unvernetzt im Band vor. Insbesondere bei Temperaturen ab etwa 70°C, bevorzugt ab etwa 80°C, läuft die Vernetzungsreaktion ab. Eine Temperaturobergrenze ist durch die Zersetzungstemperatur oder Entflammung des Elastomeren bzw. des Vernetzungsmittels gegeben, je nachdem, welche niedriger liegt. Bevorzugt für die Vernetzungsreaktion ist ein Temperaturbereich in einem Bereich von etwa 70°C bis etwa 120°C, weiter bevorzugt von etwa 75°C bis etwa 120°C, noch weiter bevorzugt von etwa 80°C bis etwa 120°C. Vorteilhafterweise wird mit dem erfindungsgemäßen Korrosionsschutzsystem einerseits eine sehr gute Haftung des mindestens vierlagigen ersten Bandes auf einem mit diesem versehenen Produkt erzielt, andererseits wird sowohl bei der Herstellung, Lagerung als auch bei der Verarbeitung des erfindungsgemäßen Korrosionsschutzsystems eine vorzeitige Vernetzung vermieden, so dass erst zum Zeitpunkt der Aufbringung des Korrosionsschutzsystems auf ein zu schützendes Produkt die Vernetzungsreaktion in Gang gesetzt ist, wobei dann zu diesem Zeitpunkt eine hohe Konzentration an funktionellen Gruppen am Vernetzungsmittel und/oder Elastomer, über welche die Vernetzung erfolgt, vorliegt. Daher weist das erfindungsgemäße Korrosionsschutzsystem auch eine sehr gute Lagerfähigkeit auf.

Die mindestens eine elastomerhaltige Lage des mindestens vierlagigen ersten Bandes umfasst vorteilhafterweise mindestens ein Elastomer ausgewählt aus einer Gruppe umfassend Butylkautschuk, Ethylen-Propylen-Kautschuk (EPM) und/oder Ethylen-Propylen-Dien-Kautschuk (EPDM). Unter dem Begriff Butylkautschuk werden im Sinne der vorliegenden Erfindung insbesondere verstanden Co- oder Block-Co-Polymere von Isobutylen mit etwa 0,5 Gew.-% bis etwa 5,0 Gew.-% Isopren, bezogen auf die Gesamtmenge des Butylkautschuk, die insbesondere durch kationische Polymerisation hergestellt werden. Über das eingesetzte Isopren und den in diesem vorhandenen Kohlenstoff-Kohlenstoff-Doppelbindungen, die als funktionelle Gruppe wirken, kann dann eine Vernetzung erfolgen. Im Sinne der vorliegenden Erfindung fallen unter den Begriff Butylkautschuk auch halogenierte Butylkautschuke, insbesondere solche, die chloriert bzw. bromiert sind (Chlorobutyl-Kautschuk bzw. Brombutyl-Kautschuk). Es können auch Gemische mehrerer Butylkautschuke eingesetzt werden. Bevorzugt wird mindestens ein unvernetzter Butylkautschuk, gegebenenfalls auch eine Mischung von mindestens zwei Butylkautschuken, die unvernetzt sind, eingesetzt. Der mindestens eine unvernetzte Butylkautschuk weist bevorzugt ein mittleres Molekulargewicht M _{w} in einem Bereich von etwa 150.000 bis etwa 2.000.000, bevorzugt von etwa 300.000 bis etwa 1.800.000, weiter bevorzugt in einem Bereich von etwa 200.000 bis etwa 500.000, auf. Der mindestens eine unvernetzte Butylkautschuk weist bevorzugt eine Mooney-Viskosität ML (1+8) bei einer Temperatur von 25°C in einem Bereich von etwa 25 MU bis etwa 65 MU, bevorzugt von etwa 30 MU bis etwa 60 MU, noch weiter bevorzugt von etwa 40 MU bis etwa 59 MU, und noch weiter bevorzugt von etwa 42 MU bis etwa 56 MU, gemessen gemäß ISO 289 in der Version von 2005 oder gemäß ASTM 1064-04, auf.

Vorteilhafterweise weist der mindestens eine unvernetzte Butylkautschuk Werte für die Ungesättigtheit in einem Bereich von etwa 1 Mol-% bis etwa 3 Mol-%, weiter bevorzugt in einem Bereich von etwa 1,3 Mol-% bis etwa 2,5 Mol-%, auf. Dies bedeutet, dass bevorzugt etwa 1 Mol-% bis etwa 3 Mol-%, weiter bevorzugt etwa 1,3 Mol-% bis etwa 2,5 Mol-%, ungesättigte Bindungen, d. h. Kohlenstoff-Kohlenstoff-Doppelbindungen, als funktionelle Gruppen im mindestens einen unvernetzten Butylkautschuk vorliegen. Besonders bevorzugt ist der mindestens eine unvernetzte Butylkautschuk hergestellt durch eine Co-Polymerisation von Isobutylen und Isopren in Methylchlorid als Lösemittel.

Unter Ethylen-Propylen-Kautschuken werden insbesondere solche Co- oder Block-Co-Polymere als auch Terpolymere (wie EPDM) verstanden, welche als funktionelle Gruppen eine Kohlenstoff-Kohlenstoff-Doppelbindung aufweisen. Auch hiervon können Gemische eingesetzt werden. Besonders bevorzugt sind dabei Terpolymere, die aus einer Polymerisationsreaktion mit Ethylen, Propylen und einem Dien entstehen. Diese werden auch EPDM-Terpolymere genannt und vereinigen ein gesättigtes Polymerrückgrat mit ungesättigten Resten in Seitengruppen. Besonders bevorzugt im Sinne der vorliegenden Erfindung werden dabei 5-Ethyliden-2-Norbornen, Dicyclopentadien und/oder 5-Vinyliden-2-Norbornen als Dien eingesetzt, und zwar in Mengen von bis zu etwa 15 Gew.-%, bevorzugt in Mengen in einem Bereich von etwa 0,3 Gew.-% bis etwa 12 Gew.-%, weiter bevorzugt in einem Bereich zwischen etwa 0,5 Gew.-% bis etwa 10 Gew.-%. Im Fall einer Polymerisation mit 5-Ethyliden-2-Norbornen werden vorzugsweise Mengen in einem Bereich von etwa 4 Gew.-% bis etwa 11 Gew.-% eingesetzt, und im Falle einer Polymerisation mit Dicyclopentadien Mengen in einem Bereich von etwa 1,0 Gew.-% bis etwa 6,0 Gew.-%. Die vorstehenden Gew.-%-Angaben sind dabei bezogen auf die Gesamtmenge der Monomere, die in einer Polymerisation zu einem Butylkautschuk bzw. Halobutylkautschuk oder einem EPDM bzw. einem EPM eingesetzt sind.

Besonders bevorzugt im Sinne der vorliegenden Erfindung ist das Elastomer ausgewählt aus einer Gruppe umfassend (Block-)Co-und/oder Terpolymere des Butylkautschuks aus Isobutylen und Isopren und/oder Terpolymere aus Ethylen und Propylen mit einem nicht konjugierten Dien. Besonders bevorzugt umfasst die mindestens eine elastomerhaltige Lage des mindestens vierlagigen ersten Bandes als Elastomer sowohl einen, bevorzugt unvernetzten, Butylkautschuk, insbesondere einen nicht halogenierten Butylkautschuk, als auch ein EPDM als Elastomer, oder in einer alternativen Ausführungsform genau einen unvernetzten Butylkautschuk. Bevorzugt weist die mindestens eine elastomerhaltige Lage des mindestens vierlagigen ersten Bandes das mindestens eine Elastomer in einer Menge in einem Bereich von 36 Gew.-% bis 77 Gew.-%, bevorzugt bis etwa 65 Gew.-%, bevorzugt in einem Bereich von etwa 45 Gew.-% bis etwa 60 Gew.-%, bezogen auf die Gesamtmenge des ersten Bandes, auf. Besonders bevorzugt umfasst die mindestens eine elastomerhaltige Lage des mindestens vierlagigen ersten Bandes dabei mindestens einen unvernetzten Butylkautschuk in einer Menge in einem Bereich von etwa 36 Gew.-% bis etwa 61 Gew.-%, bevorzugt in einem Bereich von etwa 40 Gew.-% bis etwa 60 Gew.-%, bevorzugt bis etwa 55 Gew.-%, und ggf. ein EPDM in einer Menge in einem Bereich von etwa 4 Gew.-% bis etwa 15 Gew.-%, bevorzugt in einem Bereich von etwa 6 Gew.-% bis etwa 14 Gew.-%. Die vorstehend genannten Gewichtsprozente beziehen sich dabei auf die Gesamtmenge des ersten Bandes. Es kann jedoch in einer alternativen Ausführungsform auch vorgesehen sein, dass die mindestens eine elastomerhaltige Lage des mindestens vierlagigen ersten Bandes ausschließlich mindestens einen Butylkautschuk als Elastomer oder mindestens einem Ethylen-Propylen-Kautschuk, insbesondere ein EPDM, umfasst.

Das mindestens vierlagige erste Band kann auf vielerlei Weise aufgebaut sein. Es ist erfindungsgemäß mindestens vierlagig aufgebaut, kann aber auch fünf- und sonst wie mehrlagig aufgebaut sein. So ist dieses beispielsweise derart aufgebaut sein, dass es eine äußere Lage umfassend ein Elastomer aufweist, welche auf einer inneren Lage, gebildet aus einer Trägerfolie, insbesondere einer solchen hergestellt aus mindestens einem Polyethylen und/oder Polypropylen, bevorzugt aus einem elektronenstrahlvernetzbarem Polyethylen oder Polypropylen, angeordnet ist. Besonders bevorzugt ist die Trägerfolie aus einem Polyethylen mittlerer Dichte (MDPE), bevorzugt aus einem elektronenstrahlvernetzbarem, gebildet Das eingesetzte MDPE hat bevorzugt eine Dichte zwischen etwa 0.926 g/cm³ und etwa 0.939 g/cm³, gemessen gemäß ISO 1183. Die Trägerfolie kann auch Additive wie z. B. Farbpigmente oder Ruß enthalten. Sie umfasst mindestens 93 Gew.-% Polyethylen und/oder Polypropylen sowie gegebenenfalls Additive, insbesondere in Form von Farbpigmenten oder Ruß, in einer Menge in einem Bereich von etwa 0,5 Gew.-% bis etwa 7 Gew.-%. Dabei weist die Trägerfolie, die je nach Stärke auch als Streckbremse wirken kann, auf der der elastomerhaltigen Schicht zugewandten Seite eine Haftvermittlungsschicht auf. Die Haftvermittlungsschicht weist dabei besonders bevorzugt mindestens ein Polyethylen und/oder Polypropylen als auch mindestens ein Elastomer sowie ggfs. weitere Zusätze auf. Dabei kann auch vorgesehen sein, dass bei Vorsehung einer Haftvermittlungsschicht auf beiden Seiten der Trägerfolie diese Haftvermittlungsschichten eine unterschiedliche Zusammensetzung aufweisen.

In einer Ausführungsform ist vorgesehen, dass das erste Band nur eine Lage mit den wie vorstehend definierten Elastomeren aufweist, welche mit einer Trägerfolie, insbesondere einer solchen wie vorstehend definiert, verbunden ist, wobei die Trägerfolie auf beiden Seiten eine Haftvermittlungsschicht aufweist. Bei einem solchen Aufbau weist die Trägerfolie, die dann in erster Linie einer Stabilisierung der Lage mit den erfindungsgemäß ausgewählten Elastomeren dient und eine gewisse Stärke, bevorzugt in einem Bereich von etwa 0,2 mm bis etwa 1,2 mm, weiter bevorzugt von etwa 0,3 mm bis etwa 0,7 mm, aufweist, auf ihren beiden Außenseiten Haftvermittlungsschichten mit gleichen oder unterschiedlichen Zusammensetzungen auf. So kann die Trägerfolie auf ihrer der elastomerhaltigen Lage zugewandten Seite vorzugsweise eine Haftvermittlungsschicht aufweisen, die aus dem gleichen Material wie die Trägerfolie und dem gleichen Elastomer, wie in der elastomerhaltigen Lage, bevorzugt ausschließlich aus diesen Materialien, gebildet ist. Die weitere Haftvermittlungsschicht, die auf der der elastomerhaltigen Lage abgewandten Seite der Trägerfolie aufgebracht ist, kann hingegen, insbesondere bei Vorsehung eines mindestens einlagigen zweiten Bandes, welches insbesondere als ein einen mechanischen Schutz vermittelndes Band um das erste Band auf dem betreffenden Produkt wickelbar ist, neben einem Elastomer und dem Material der Trägerfolie, insbesondere einem Polyethylen und/oder Polypropylen, auch Tackifier, insbesondere in Form von Kohlenwasserstoffharzen, sowie sonstige Zusätze wie Antioxidantien, Aktivatoren oder Farbpigmente aufweisen. Aktivatoren sind dabei solche Verbindungen, die ähnlich dem erfindungsgemäß eingesetzten Katalysatormittel eine Vernetzung in dem erfindungsgemäß eingesetzten Elastomeren initiieren, insbesondere bei höheren Temperaturen, insbesondere solchen ab etwa 50°C, bevorzugt ab etwa 70°C, weiter bevorzugt ab etwa 80°C, und bevorzugt solchen in einem Bereich von etwa 55°C bis etwa 220°C, weiter bevorzugt in einem Bereich von etwa 60°C bis etwa 140°C. Als Aktivatoren können daher die gleichen Verbindungen eingesetzt werden, die als erfindungsgemäß eingesetzte Katalysatormittel eingesetzt werden, wie dort beschrieben, bevorzugt werden organischen Verbindungen mit Zink oder Zinn, zum Beispiel Zinkstearate oder Zinkoleate, alleine oder in Mischung, eingesetzt. Die Aktivatoren, einzeln oder in Mischung, sind von der äußeren Haftvermittlungsschicht vorzugsweise in einer Menge in einem Bereich von etwa 0,1 Gew.-% bis etwa 10 Gew.-%, bevorzugt in einem Bereich von etwa 0,3 Gew.-% bis etwa 4 Gew.-%, jeweils bezogen auf die Gesamtmenge der äußeren Haftvermittlungsschicht, umfasst. Bei Wicklung oder Aufbringung des ersten Bandes mit Überlappungen auf rohrförmigen oder sonstigen Gegenständen mit einer Überlappung kann dann bei Vorsehung von Aktivatoren in der äußeren Haftvermittlungsschicht eine Vernetzung bei erhöhten Temperaturen, wie vorstehend beschrieben, im Überlappungsbereich initiiert werden, so dass ein festerer Halt ohne Faltenbildung im Überlappungsbereich erzielbar ist.

Das erste Band ist asymmetrisch aufgebaut. Dieses kann beispielsweise derart aufgebaut sein, dass eine Lage, die mindestens ein Elastomer gemäß der vorliegenden Erfindung als auch mindestens ein Vernetzungsmittel aufweist, und die dem abzudeckenden Produkt zugewandt wird, verbunden ist mit einer Trägerfolie wie vorstehend definiert. Dabei ist zwischen der elastomerhaltigen Lage und der Trägerfolie eine Haftvermittlungsschicht angeordnet. Die Trägerfolie auf der der elastomerhaltigen Lage mit Vernetzungsmitteln abgewandten Seite weist eine weitere Haftvermittlungsschicht auf, die vorzugsweise ebenfalls ein Elastomer, besonders bevorzugt Butylkautschuk, als auch das Material der Trägerfolie umfasst, und weiter bevorzugt zusätzlich Tackifier wie Kohlenwasserstoffharze, Aktivatoren und sonstige Additive, wie bereits oben beschrieben.

Im Sinne der vorliegenden Erfindung kann jedoch auch vorgesehen sein, dass das erste Band mindestens eine Lage einer Streckbremse umfasst. Dabei kann das erste Band beispielsweise derart ausgestaltet sein, dass dieses in etwa mittig in die eleastomerhaltige Lage eine sehr dünne Zwischenlage, bevorzugt eine solche mit einer Stärke in einem Bereich von etwa 15 µm bis etwa 100 µm, weiter bevorzugt in einem Bereich von etwa 20 µm bis etwa 75 µm, eingebracht aufweist. Diese Zwischenlage dient als Streckbremse und verhindert eine Überdehnung des Bandes insbesondere bei einer spiralförmigen Wicklung desselben um ein zu umhüllendes Produkt. Besonders bevorzugt ist die Streckbremse bzw. die Zwischenlage gebildet aus mindestens einem Polyethylen und/oder Polypropylen und ist besonders bevorzugt eine Polyethylenfolie. Eine solchermaßen mit einer Streckbremse versehene Lage des ersten Bandes mit dem mindestens einen Elastomer und dem mindestens einen Vernetzungsmittel kann auch als zwei- oder alternativ als dreilagig angesprochen werden. Die Streckbremse kann dabei symmetrisch etwa in der Mitte, aber auch asymmetrisch verschoben zu der Oberseite oder Unterseite des Bandes in diesem angeordnet sein. Bevorzugt erfolgt jedoch eine symmetrische Anordnung etwa in der Mitte, d. h. bei halber Stärke des ersten Bandes, soweit dieses ansonsten ausschließlich eine Lage umfasst, die mindestens ein Elastomer und mindestens ein Vernetzungsmittel umfasst.

Die vorstehend angesprochenen Haftvermittlungsschichten weisen bevorzugt das mindestens eine Elastomer des ersten Bandes und mindestens ein Polyethylen und/oder Polypropylen auf. Besonders bevorzugt weisen diese mindestens einen Butylkautschuk und/oder mindestens ein EPDM auf, weiter bevorzugt genau einen Butylkautschuk, oder eine Mischung von zwei Butylkautschuken, wobei die Menge des eingesetzten mindestens einen Elastomeren in einem Bereich von etwa 35 Gew.-% bis etwa 72 Gew.-%, bevorzugt bis etwa 65 Gew.-%, weiter bevorzugt in einem Bereich von etwa 40 Gew.-% bis etwa 60 Gew.-%, bezogen auf die Gesamtmenge der Haftvermittlungsschicht, liegt. Das mindestens eine Polyethylen und/oder Polypropylen, bevorzugt mindestens eine Polyethylen, weiter bevorzugt genau ein Polyethylen, ist in der Haftvermittlungsschicht zugegen in einer Menge in einem Bereich von etwa 25 Gew.-% bis etwa 65 Gew.-%, weiter bevorzugt in einer Menge in einem Bereich von etwa 30 Gew.-% bis etwa 60 Gew.-%, weiter bevorzugt bis etwa 45 Gew.-%, bezogen auf die Gesamtmenge der Haftvermittlungsschicht. Eine Zusammensetzung einer Haftvermittlungsschicht umfasst dabei ausschließlich das mindestens eine Elastomer und das mindestens eine Polyethylen und/oder Polypropylen, bevorzugt genau einen Butylkautschuk als Elastomer, oder alternativ genau einen Butylkautschuk und genau ein EPDM, und genau ein Polyethylen oder genau ein Polypropylen, und ansonsten keine weiteren Zusätze. Das Polyethylen und/oder Polypropylen kann dabei, wie auch das in der Trägerfolie eingesetzte, als Masterbatch mit Additiven wie Pigmenten oder Ruß eingesetzt sein. Letztere können in einer Menge in einem Bereich von etwa 0,5 Gew.-% bis etwa 7 Gew.-%, bezogen auf die Menge des eingesetzten Polyethylen und/oder Polypropylen, von diesem erfasst sein.

Soweit als mindestens ein Elastomer mindestens ein Butylkautschuk in der Haftvermittlungsschicht eingesetzt ist, ist dieser bevorzugt ausgewählt aus einer Gruppe umfassend zumindest teilweise vorvernetzte Butylkautschuke, weiter bevorzugt stark vorvernetzte Butylkautschuke. Bevorzugt wird genau ein zumindest teilweise vorvernetzter, bevorzugt stark vorvernetzter Butylkautschuk in einer Haftvermittlungsschicht eingesetzt.

Der mindestens eine zumindest teilweise vorvernetzte Butylkautschuk weist bevorzugt gemäß ISO 289 in der Version 2005 oder gemäß ASTM 1604-04 eine Mooney-Viskosität ML (1+3) bei 127°C in einem Bereich von etwa 30 MU bis etwa 100 MU, bevorzugt von etwa 50 MU bis etwa 98 MU, noch weiter bevorzugt von etwa 60 MU bis etwa 95 MU, noch weiter bevorzugt von etwa 65 MU bis etwa 93 MU, noch weiter bevorzugt in einem Bereich von etwa 78 MU bis etwa 92 MU, und noch weiter bevorzugt von etwa 78 MU bis etwa 90 MU, auf. Die spezifische Dichte des zumindest teilweise vorvernetzten Butylkautschuks liegt bei einer Temperatur von 25°C gemäß ASTM D1875 in der Version von 2003 in einem Bereich von etwa 0,5 bis etwa 1,1, bevorzugt in einem Bereich von etwa 0,9 bis etwa 0,98. Der mindestens eine zumindest teilweise vorvernetzte Butylkautschuk kann auch ein Halobutylkautschuk sein.

Soweit als Trägerfolie ein Polyethylen, bevorzugt ein Polyethylen mittlerer Dichte (MDPE) oder höherer Dichte (HDPE), noch weiter bevorzugt ein elektronstrahlvernetzbares Polyethylen, insbesondere ein solches mittlerer Dichte, vorgesehen ist, wobei die Trägerfolie gegebenenfalls weitere Additive, wie vorstehend beschrieben, aufweisen kann, umfasst die Haftvermittlungsschicht bevorzugt mindestens ein Elastomer, wobei das mindestens eine Elastomer bevorzugt mindestens ein Butylkautschuk, weiter bevorzugt mindestens ein vorvernetzter Butylkautschuk, wie vorstehend beschrieben, und/oder ein EPDM sein kann. Besonders bevorzugt weist die Haftvermittlungsschicht bei Vorsehung einer Trägerfolie aus Polyethylen, insbesondere aus MDPE, genau einen vorvernetzten Butylkautschuk und genau ein EPDM auf. Der mindestens eine, bevorzugt genau eine Butylkautschuk ist dabei in einer Menge in einem Bereich von etwa 40 Gew.-% bis etwa 70 Gew.-%, weiter bevorzugt in einer Menge in einem Bereich von etwa 42 Gew.-% bis etwa 60 Gew.-%, in der Haftvermittlungsschicht vorhanden, und das mindestens eine EPDM. Daneben weist die Haftvermittlungsschicht bei Vorsehen einer Trägerfolie auf Polyethylenbasis ein Polyethylen auf, bevorzugt ein Polyethlyen mittlerer Dichte oder aber ein Polyethylen höherer Dichte (HDPE), noch weiter bevorzugt mindestens ein HDPE, noch weiter bevorzugt genau ein HDPE. Das mindestens eine Polyethylen ist in der Haftvermittlungsschicht in einer Menge in einem Bereich von etwa 25 Gew.-% bis etwa 40 Gew.-%, bezogen auf die Gesamtmenge der Haftvermittlungsschicht, vorhanden, soweit als Trägerfolie ein Polyethylen, bevorzugt ein elektronenstrahlvernetzbares Polyethylen, besonders bevorzugt ein elektronenstrahlvernetzbares Polyethylen mittlerer Dichte, eingesetzt ist.

Soweit als Trägerfolie ein Polypropylen eingesetzt ist, wobei dieses wie auch im Fall der Versehung einer Trägerfolie aus Polyethylen, Additive insbesondere in Form von Farbpigmenten aufweisen kann, ist die mindestens eine Haftvermittlungsschicht bevorzugt gebildet aus mindestens einem Elastomer, bevorzugt mindestens einem Butylkautschuk, besonders bevorzugt mindestens einem zumindest teilweise vorvernetzten Butylkautschuk, wie weiter oben beschrieben, und umfasst noch weiter bevorzugt genau einen vorvernetzten Butylkautschuk wie weiter oben beschrieben. Das mindestens eine Elastomer, bevorzugt mindestens ein Butylkautschuk, noch weiter bevorzugt genau ein Butylkautschuk, und noch weiter bevorzugt genau ein zumindest teilweise vorvernetzter Butylkautschuk, ist bevorzugt in einer Menge in einem Bereich von etwa 50 Gew.-% bis etwa 75 Gew.-%, weiter bevorzugt in einer Menge in einem Bereich von etwa 55 Gew.-% bis etwa 71 Gew.-%, bezogen auf die Gesamtmenge der Haftvermittlungsschicht, von der Haftvermittlungsschicht umfasst. Die Haftvermittlungsschicht weist weiter bevorzugt bei Einsatz einer Trägerfolie auf Polypropylenbasis mindestens ein Polypropylen und/oder Polyethylen, bevorzugt ein identisches Polypropylen wie in der Trägerfolie eingesetzt, auf. Das mindestens eine, bevorzugt genau eine Polypropylen und/oder Polyethylen der Haftvermittlungsschicht ist von dieser in einer Menge in einem Bereich von etwa 20 Gew.-% bis etwa 55 Gew.-%, weiter bevorzugt in einer Menge in einem Bereich von etwa 25 Gew.-% bis etwa 40 Gew.-%, umfasst. Als Polyethylen kann dabei ein solches eingesetzt werden wie vorstehend im Zusammenhang mit einer Trägerfolie auf Polyethylenbasis beschrieben. Soweit Polyethylen in der Haftvermittlungsschicht zugegen ist, ist bevorzugt mindestens ein EPDM, genau ein EPDM, in einer Menge in einem Bereich von etwa 10 Gew.-% bis etwa 30 Gew.-%, weiter bevorzugt in einer Menge von etwa 12 Gew.-% bis etwa 22 Gew.-%, jeweils bezogen auf die Gesamtmenge der Haftvermittlungsschicht, von dieser umfasst.

Bevorzugt umfassen die Haftvermittlungsschichten neben den eingesetzten Elastomeren und eingesetzten Polyethylenen und/oder Polypropylenen keine weiteren Additive. Es können jedoch beispielsweise Additive, insbesondere in Form von Farbpigmenten und Ruß, zugesetzt sein in Mengen in einem Bereich von etwa 0,5 Gew.-% bis etwa 4 Gew.-%, jeweils bezogen auf die Gesamtmenge der Haftvermittlungsschicht.

Eine weitere Zusammensetzung einer Haftvermittlungsschicht umfasst neben dem mindestens einen Elastomer und dem mindestens einen Polyethylen und/oder Polypropylen weitere Additive, und zwar bevorzugt Tackifier, Antioxidantien, Aktivatoren wie oben beschrieben und Pigmente. Dabei kann beispielsweise ein Tackifier in einer Menge in einem Bereich von etwa 5 Gew.-% bis etwa 15 Gew.-%, weiter bevorzugt in einer Menge in einem Bereich von etwa 7 Gew.-% bis etwa 13 Gew.-%, zugegen sein, und ist vorzugsweise ausgewählt aus einer Gruppe umfassend Kohlenwasserstoffharze. Darüber hinaus kann ein Antioxidationsmittel vorgesehen sein, bevorzugt in einer Menge in einem Bereich von 0,05 Gew.-% bis etwa 0,5 Gew.-%, weiter bevorzugt in einer Menge von etwa 0,1 Gew.-% bis etwa 0,5 Gew.-%. Das Antioxidationsmittel kann dabei insbesondere ausgewählt sein aus einer Gruppe umfassend sterisch gehinderte Phenole, wie beispielsweise Pentaerythriol-Tetrakis(3-(3,5-di-ter-butyl-4-hydroxyphenyl)propionat). Daneben kann die Haftvermittlungsschicht auch mindestens ein Pigment aufweisen, insbesondere ein solches, welches in Form eines Masterbatches vorliegt. Das mindestens eine Pigment ist in einer Menge in einem Bereich von etwa 0,5 Gew.-% bis etwa 8 Gew.-%, weiter bevorzugt in einer Menge in einem Bereich von etwa 0,9 Gew.-% bis etwa 2 Gew.-%, in einer Zusammensetzung einer Haftvermittlungsschicht umfasst. Das Pigment kann beispielsweise ein Schwarzpigment sein, um dem ersten Band einen einheitlichen Gesamteindruck zu vermitteln. Es kann jedoch auch zur Hervorhebung und Kenntlichmachung des Vorhandenseins einer Haftvermittlungsschicht ein jedwedes andere Pigment, beispielsweise ein rotfarbiges, eingesetzt werden. Die vorstehend genannten Gewichtsprozentbereiche betreffend die Zusammensetzung der Haftvermittlungsschicht beziehen sich jeweils auf die Gesamtmenge der Haftvermittlungsschicht. Die Haftvermittlungsschicht hat vorzugsweise eine Stärke in einem Bereich von etwa 10 µm bis etwa 150 µm, weiter bevorzugt eine Stärke in einem Bereich von etwa 20 µm bis etwa 100 µm, noch weiter bevorzugt eine Stärke in einem Bereich von etwa 25 µm bis etwa 80 µm.

Die Trägerfolie, soweit sie nicht als Streckbremse ausgestaltet ist, weist vorteilhafterweise eine Stärke in einem Bereich von etwa 0,2 mm bis etwa 1,2 mm, weiter bevorzugt eine Stärke in einem Bereich von etwa 0,3 mm bis etwa 0,8 mm auf. Die Trägerfolie besteht vorteilhafterweise aus Polyethylen oder Polypropylen, und besteht bevorzugt aus einem Polyethylen. Besonders bevorzugt ist die Trägerfolie ausgebildet aus einer Gruppe umfassend Polyethylene, die elektronenstrahlvernetzbar sind, weiter bevorzugt aus einem Polyethylen mittlerer Dichte (MDPE). Wird die Trägerfolie mit Haftvermittlungsschichten eingesetzt, ist in den Haftvermittlungsschichten ebenfalls ein Polyethylen eingesetzt, welches bevorzugt elektronenstrahlvernetzbar ist. Weiter vorteilhafterweise ist die Trägerfolie einer leichten Reckung unterzogen worden, so dass vorteilhafterweise eine Schrumpfneigung bei Erwärmung derselben entsteht und eine mögliche Längenausdehnung bei Erwärmung überkompensiert werden kann. Zudem wird bei einer Anwendung in Form einer Umwicklung rohrförmiger Gegenstände dann auch die Anpresskraft in Richtung auf den rohrförmigen Gegenstand verstärkt.

Weist die Trägerfolie auf beiden Seiten eine Haftvermittlungsschicht auf, so wird der gesamte Verbund einer leichten Reckung unterzogen. Ein derartig hergestellter Folienverbund wird dann nachfolgend mit den erfindungsgemäß einsetzbaren Polymeren auf einer Seite beschichtet. Diese Schicht weißt vorteilhafterweise eine Stärke in einem Bereich von etwa 0,25 mm bis etwa 2 mm, weiter bevorzugt in einem Bereich von etwa 0,35 mm bis etwa 1,3 mm, auf. Wird die Trägerfolie auf beiden Seiten mit einer Haftvermittlungsschicht versehen und ist die Trägerfolie nur auf einer Seite mit einer gemäß der Erfindung einsetzbaren Elastomermischung beschichtet, weist die äußere Haftvermittlungsschicht vorteilhafterweise Aktivatoren auf, wie dies vorstehend beschrieben ist. Die Zusammensetzung der auf beiden Seiten der Trägerfolie angeordneten Haftvermittlungsschichten kann damit besonders bevorzugt im Sinne der vorliegenden Erfindung unterschiedlich sein. Der vorstehend beschriebene Bandaufbau weist den großen Vorteil auf, dass einerseits im Überlappungsbereich bei Umhüllung oder Aufbringung eines solchen Bandes durch den vorgesehenen Aktivator ebenfalls eine Vernetzungsreaktion initiiert wird, und darüber hinaus, gleich ob mit Überlappung aufgebracht oder nicht, dass das erste Band z. B. von einem identischem ersten Band umwickelt werden kann, wobei dann der in der äußeren Haftvermittlungsschicht vorhandene Aktivator die Vernetzung des diesen zugewandten, elastomerhaltigen Teiles des zweiten Bandes initiiert. Die Trägerfolie kann dabei noch weitere Additive umfassen, beispielsweise Pigmente, Antioxidationsmittel oder Stabilisatoren.

Das erfindungsgemäße Korrosionsschutzsystem umfasst bevorzugt weiterhin ein zweites Band zur Vermittlung eines mechanischen Schutzes. Das zweite Band ist mindestens einlagig aufgebaut, und ist bevorzugt ein-, zwei- oder dreilagig aufgebaut. Es kann jedoch auch vier- oder sonst wie höherlagig aufgebaut sein. Das zweite Band ist als mechanisches Schutzband anzusprechen. Das zweite Band umfasst bevorzugt eine Lage aus mindestens einem Polyethylen und/oder Polypropylen, bevorzugt mindestens einem Polyethylen, bevorzugt elektronenstrahlvernetztes Polyethylen, ausreichender Stärke. Soweit Polyethylen eingesetzt wird, weist dieses vorzugsweise eine Reißdehnung gemäß ISO 527 von > 300 %, weiter bevorzugt > 400 %, noch weiter bevorzugt > 500 %, bevorzugt eine solche in einem Bereich von etwa 300 % bis etwa 800 % auf. Weiter bevorzugt weist es eine Zugfestigkeit gemäß ISO 527 in einem Bereich von etwa 8 bis etwa 25 MPa, weiter bevorzugt in einem Bereich von etwa 12 bis etwa 20 MPa auf. Das zweite Band kann beispielsweise auch eingesetzt werden, wenn zwei identische erste Bänder, wobei sich die Identität insbesondere auf den Aufbau, aber auch auf die chemische Zusammensetzung bezieht, um einen rohrförmigen Gegenstand gewickelt werden.

Die mindestens eine Lage aus Polyethylen und/oder Polypropylen, bevorzugt genau eine Lage, des zweiten Bandes kann auf einer Seite mit einer Klebeschicht versehen sein. Es kann jedoch auch vorgesehen sein, dass diese auf einer Seite mit einer Klebeschicht aus mindestens einem Elastomeren gemäß der vorliegenden Erfindung, und insbesondere mindestens einem Butylkautschuk und/oder mindestens einen EPDM, bevorzugt aus einem Butylkautschuk, gebildet ist. Diese Schicht kann neben dem mindestens einen Butylkautschuk und/oder mindestens einem EPDM noch weitere Additive wie Antioxidationsmittel, Kohlenwasserstoffharze als Tackifier, Prozessöle, Pigmente o. ä. umfassen. Soweit eine Kleberschicht mit mindestens einem Elastomeren, wie vorstehend beschrieben, mit der Lage aus mindestens einem Polyethylen und/oder Polypropylen verbunden wird, wird dabei vorzugsweise für das zweite Band vorgesehen, dass zwischen diesen beiden Lagen eine Schicht als Haftvermittler vorgesehen ist, wobei diese eine Zusammensetzung aufweisen kann, wie diese im Zusammenhang mit dem ersten Band weiter oben beschrieben ist.

Das mit dem erfindungsgemäßen Korrosionsschutzsystem abzudeckende Produkt kann jedwedes Produkt sein, welches grundsätzlich korrodieren kann. Besonders bevorzugt wird das erfindungsgemäße Korrosionsschutzsystem für Rohranlagen eingesetzt, also Anlagen, welche zumindest teilweise aus Rohren bestehen. Insbesondere wird das erfindungsgemäße Korrosionsschutzsystem eingesetzt für die Umhüllung von Pipelines gleich welcher Art, aber auch zur Umhüllung von Gasleitungen etc. Es kann jedoch auch eingesetzt werden für sonstige technische Anlagen und/oder in Bereichen, in welchen Korrosion auftritt, und dabei nicht nur in Form einer Wicklung, sondern auch zum Beispiel in Form einer Auflage/Abdeckung, eingesetzt sein.

Das mindestens eine Vernetzungsmittel, welches in der mindestens einen elastomerhaltigen Lage des mindestens vierlagigen ersten Bandes enthalten ist, ist vorteilhafterweise ausgewählt aus einer Gruppe umfassend mindestens ein Phenolharz. Phenolharze sind Reaktionsharze und werden über Vernetzungsreaktionen zu Duroplasten, den sogenannten Phenoplasten, nachgehärtet. Eine derartige Vernetzungsreaktion findet im erfindungsgemäßen Korrosionsschutzsystem statt. Phenolharze sind Kondensationsprodukte von Phenolen mit Aldehyden, vorzugsweise mit Formaldehyd. Im Sinne der vorliegenden Erfindung ist besonders bevorzugt vom ersten Band umfasst mindestens ein Phenolharz, welches Hydroxymethyl-Gruppen aufweist. Diese Hydroxymethyl-Gruppen stellen die reaktiven bzw. funktionellen Gruppen dar, über welche eine Vernetzungsreaktion, die auch als Selbsthärtungsreaktion im Sinne der vorliegenden Erfindung angesprochen werden kann, mit den funktionellen Gruppen des mindestens einen Elastomers im ersten Band erfolgt. Besonders bevorzugt im Sinne der vorliegenden Erfindung ist das mindestens eine Phenolharz hergestellt aus mindestens einem Phenol oder dessen Derivaten und mindestens einem Aldehyd, ausgewählt aus einer Gruppe umfassend Formaldehyd, Acetaldehyd, Benzaldehyd und/oder Acrolein, wobei besonders bevorzugt Formaldehyd eingesetzt ist. Als Phenol-Derivate werden insbesondere tetra-Butylphenol, Nonylphenol oder Octylphenol eingesetzt, wobei aber auch Aryl-Derivate, insbesondere Phenylphenol, als auch zweiwertige Phenole wie Resorcin oder Bisphenol A und Naphthole eingesetzt werden können. Besonders bevorzugt sind Octylphenol-Formaldeyd-Harze. Die erfindungsgemäßen Phenolharze sind insbesondere solche, die in die Klasse der sogenannten Resole fallen, d. h. durch eine basisch katalysierte Reaktion der genannten Ausgangsprodukte hergestellt werden.

Vorteilhafterweise umfasst die mindestens eine elastomerhaltige Lage des mindestens vierlagigen ersten Bandes das mindestens eine Vernetzungsmittel in einer Menge in einem Bereich von 0,18 Gew.-% bis 11 Gew.-%, weiter bevorzugt in einer Menge in einem Bereich von etwa 0,5 Gew.-%, weiter bevorzugt von etwa 1,5 Gew.-%, bevorzugt von 3,5 Gew.-%, bis etwa 8 Gew.-%, bevorzugt bis etwa 5 Gew.-%, bezogen auf die Gesamtmenge des ersten Bandes.

Zum Start der Vernetzungsreaktion im erfindungsgemäßen Korrosionsschutzsystem, die insbesondere über das mindestens eine Vernetzungsmittel initiiert wird, ist im Voranstrichmittel mindestens ein Katalysatormittel vorgesehen. Dieses weist vorteilhafterweise Elektronendonor-Eigenschaften auf. Besonders bevorzugt ist das mindestens eine Katalysatormittel ausgewählt aus einer Gruppe umfassend Zinkchlorid, Zinkbromid, Eisenchlorid, Antimonchlorid, Antimonbromid, Zinnbromid, Germaniumchlorid, Kobaltbromid Nickelchlorid, und/oder organische Salze des Zinn oder Zink, wie Zinkstearate oder Zinkoleate, wobei besonders bevorzugt Zinn- oder Zinkhalogenide, und weiter bevorzugt Zinnchlorid und Zinkchlorid, als auch mindestens ein Zinkstearat, alleine oder in Mischung, eingesetzt werden.

Erfindungsgemäß umfasst das mindestens eine Voranstrichmittel das Katalysatormittel in einer Menge in einem Bereich von 0,0009 Gew.-%, bevorzugt von etwa 0,003 Gew.-%, bis 5,5 Gew.-%, weiter bevorzugt in einer Menge in einem Bereich von etwa 0,005 Gew.-% bis etwa 4,5 Gew.-%, noch weiter bevorzugt in einer Menge von etwa 0,3 Gew.-% bis etwa 4,5 Gew.-%, noch weiter bevorzugt in einer Menge von etwa 0,35 Gew.-% bis etwa 4 Gew.-%, bezogen auf die Gesamtmenge des Voranstrichmittels. Besonderes bevorzugt ist als Katalysatormittel ein Zinkstearat eingesetzt, besonders bevorzugt in einer Menge in einem Bereich von etwa 0,002 Gew.-% bis etwa 1 Gew.-%, weiter bevorzugt bis etwa 0,5 Gew.-%, jeweils bezogen auf die Gesamtmenge des Voranstrichmittels. Vorteilhafterweise liegt im Sinne der vorliegenden Erfindung das Verhältnis zwischen der Menge des eingesetzten Katalysators und der Menge des eingesetzten Vernetzungsmittels in einem Bereich von etwa 3:1 bis etwa 1:2.

Das mindestens eine Voranstrichmittel wird vor Umhüllung oder Abdeckung des in Rede stehenden Produktes zum Korrosionsschutz mit dem mindestens einen ersten Band auf das Produkt aufgetragen, beispielsweise mit üblichen Streichwerkzeugen wie Pinseln, Spachteln o. ä. Das Voranstrichmittel umfasst vorteilhafterweise weiterhin mindestens ein Elastomer, wie dies im Hinblick auf das für das mindestens vierlagige erste Band weiter oben beschrieben ist. Das Voranstrichmittel umfasst dieses mindestens eine Elastomer vorzugsweise in einer Menge in einem Bereich von 3,6 Gew.-% bis 22 Gew.-%, weiter bevorzugt in einer Menge in einem Bereich von etwa 7 Gew.-% bis etwa 15 Gew.-%, bezogen auf die Gesamtmenge des Voranstrichmittels. Der große Vorteil der Vorsehung mindestens eines Elastomers im Voranstrichmittel führt vorteilhafterweise zu einer festeren Bindung zwischen Voranstrichmittel und Produkt einerseits und andererseits zwischen Voranstrichmittel und dem mindestens vierlagigen ersten Band. Besonders bevorzugt ist dabei im Voranstrichmittel mindestens ein Elastomer enthalten, welches identisch im mindestens vierlagigen ersten Band enthalten ist, wobei sich die Identität auf die chemische Struktur bezieht. Beispielsweise kann im Voranstrichmittel mindestens ein unvernetzter Butylkautschuk enthalten sein, oder eine Mischung mindestens eines Butylkautschuks mit mindestens einem Ethylen-Propylen-Kautschuk, insbesondere einem EPDM, oder nur ein Ethylen-Propylen-Kautschuk, insbesondere ein EPDM. Besonders bevorzugt ist im Voranstrichmittel als Elastomer genau ein unvernetzter Butylkautschuk oder aber eine Mischung zweier Butylkautschuke eingesetzt, und in der mindestens einen elastomerhaltigen Lage des mindestens vierlagigen ersten Bandes als mindestens ein Elastomer eine Mischung aus einem Butylkautschuk mit einem EPDM.

Weiter bevorzugt umfasst das mindestens eine Voranstrichmittel mindestens ein Co-Reagenz für das Katalysatormittel, ausgewählt aus einer Gruppe umfassend Triallylcyanurat, Triallylisocyanurat, Triallylphosphat und/oder Divinylbenzol, und besonders bevorzugt ein Triallylcyanurat und/oder ein Triallylisocyanurat. Das Co-Reagenz dient insbesondere der Verträglichmachung des eingesetzten Katalysatormittels im Voranstrichmittel. Das Voranstrichmittel umfasst das Co-Reagenz vorteilhafterweise in einer Menge in einem Bereich von 0,009 Gew.-% bis 5,5 Gew.-%, weiter bevorzugt in einer Menge in einem Bereich von etwa 0,02 Gew.-% bis etwa 5 Gew.-%, bevorzugt bis etwa 3 Gew.-%, bezogen auf die Gesamtmenge des Voranstrichmittels. Besonders bevorzugt ist als Co-Reagenz eingesetzt ein solches aus einer Gruppe umfassend Triallylcyanurat, Triallylisocyanurat und/oder Triallylphosphat, besonders bevorzugt mindestens ein Triallylcyanurat, wobei die vorstehend genannten Co-Reagenzien in einer Menge in einem Bereich von etwa 0,02 Gew.-% bis etwa 0,5 Gew.-%, bevorzugt in einer Menge in einem Bereich von etwa 0,025 Gew.-% bis etwa 0,3 Gew.-%, jeweils bezogen auf die Gesamtmenge des Voranstrichmittels, im Voranstrichmittel enthalten sein können.

Das Voranstrichmittel umfasst weiterhin mindestens ein Lösemittel auf Benzinbasis, und weiter bevorzugt mindestens ein Kohlenwasserstoffharz als Tackifier. Besonders bevorzugt umfasst das Voranstrichmittel einen Tackifier, insbesondere ein Kohlenwasserstoffharz, in einer Menge in einem Bereich von etwa 10 Gew.-% bis etwa 25 Gew.-%, weiter bevorzugt in einer Menge in einem Bereich von etwa 12 Gew.-% bis etwa 20 Gew.-%, jeweils bezogen auf die Gesamtmenge des Voranstrichmittels. Bevorzugt umfasst das Voranstrichmittel das mindestens eine Lösemittel, insbesondere ein solches auf Benzinbasis, in einer Menge in einem Bereich von etwa 50 Gew.-% bis etwa 90 Gew.-%, weiter bevorzugt in einer Menge in einem Bereich von etwa 60 Gew.-% bis etwa 85 Gew.-%, jeweils bezogen auf die Gesamtmenge des Voranstrichmittels. Gerade aufgrund der Vorsehung eines Lösemittels, aber auch aufgrund der Vorsehung eines Tackifiers, ist der Zusatz eines Co-Reagenz für das Katalysatormittel sinnvoll.

In einer bevorzugten Zusammensetzung umfasst das Voranstrichmittel mindestens ein Katalysatormittel in einer Menge in einem Bereich von etwa 0,003 Gew.-%, bevorzugt von etwa 0,35 Gew.-%, bis etwa 4,5 Gew.-%, mindestens ein Co-Reagenz für das Katalysatormittel in einer Menge in einem Bereich von etwa 0,02 Gew.-%, bevorzugt von etwa 0,03 Gew.-%, bis etwa 4 Gew.-%, weiterhin mindestens ein Elastomer, bevorzugt mindestens einen Butylkautschuk und/oder EPDM, noch weiter bevorzugt genau einen Butylkautschuk, in einer Menge in einem Bereich von etwa 6 Gew.-% bis etwa 14 Gew.-%, als Tackifier mindestens ein Kohlenwasserstoffharz in einer Menge in einem Bereich von etwa 12 Gew.-% bis etwa 20 Gew.-%, bevorzugt bis etwa 18 Gew.-%, und als Lösemittel ein solches auf Benzinbasis in einer Menge in einem Bereich von etwa 65 Gew.-% bis etwa 80 Gew.-%, wobei die Gewichtsprozentangaben jeweils bezogen sind auf die Gesamtmenge des Voranstrichmittels. Im Übrigen können die genannten Gewichtsprozentangaben auch jeweils allein bevorzugt, nicht nur in der genannten konkreten Zusammensetzung, im Voranstrichmittel eingesetzt werden. Weiter bevorzugt wird im erfindungsgemäßen Korrosionsschutzsystem genau ein Voranstrichmittel eingesetzt.

Die mindestens eine elastomerhaltige Lage des mindestens vierlagigen ersten Bandes umfasst neben dem mindestens einen Elastomer und dem mindestens einen Vernetzungsmittel vorteilhafterweise mindestens einen Füllstoff, Ruß, Titandioxid, mindestens ein Antioxidationsmittel, mindestens ein Kohlenwasserstoffharz, mindestens ein Stabilisationsmittel, bei Versehung mit einer Haftvermittlungsschicht mindestens einen polymeren Haftvermittler, und/oder mindestens ein Öl als Weichmacher. Besonders bevorzugt umfasst das erste Band als Weichmacher ein Prozessöl, bevorzugt in einer Menge in einem Bereich von etwa 2 Gew.-% bis etwa 10 Gew.-%, weiter bevorzugt in einer Menge in einem Bereich von etwa 3,5 Gew.-% bis etwa 8 Gew.-%. Bevorzugt umfasst das erste Band einen Tackifier, insbesondere einen solchen ausgewählt aus der Gruppe der Kohlenwasserstoffharze, in einer Menge in einem Bereich von etwa 6 Gew.-% bis etwa 25 Gew.-%, weiter bevorzugt in einer Menge in einem Bereich von etwa 8 Gew.-% bis etwa 18 Gew.-%. Weiter bevorzugt umfasst das erste Band mindestens einen Füllstoff, ausgewählt aus der Gruppe der pulverförmigen mineralischen Füllstoffe oder der mineralischen und/oder organischen faserartigen Füllstoffe, beispielsweise Talkum, Zinkoxid, Cellulosefasern u. ä. Besonders bevorzugt umfasst das erste Band mindestens einen Füllstoff in einer Menge in einem Bereich von etwa 10 Gew-% bis etwa 25 Gew.-%, weiter bevorzugt in einer Menge in einem Bereich von etwa 13 Gew.-% bis etwa 22 Gew.-%. Weiterhin umfasst das erste Band vorteilhafterweise mindestens ein Antioxidationsmittel, bevorzugt eine Mischung verschiedener Antioxidationsmittel, in einer Menge in einem Bereich von etwa 0,1 Gew.-% bis etwa 1 Gew.-%, weiter bevorzugt in einer Menge in einem Bereich von 0,2 Gew.-% bis etwa 0,5 Gew.-%. Soweit Ruß vorhanden ist, kann das erste Band Ruß in einer Menge in einem Bereich von etwa 2 Gew.-% bis etwa 10 Gew.-%, weiter bevorzugt in einer Menge in einem Bereich von etwa 3 Gew.-% bis etwa 9 Gew.-%, aufweisen. Als Stabilisationsmittel, das auch als Dispergierhilfsmittel bezeichnet werden kann kann beispielsweise Stearinsäure eingesetzt werden. Das Stabilisationsmittel ist bevorzugt in einer Menge in einem Bereich von etwa 0,05 Gew.-% bis etwa 0,5 Gew.-% zugegen. Soweit Titandioxid enthalten ist, welches insbesondere als Farbpigment dient, ist dieses in einer Menge in einem Bereich von etwa 1 Gew.-% bis etwa 6 Gew.-%, weiter bevorzugt in einer Menge in einem Bereich von etwa 2 Gew.-% bis etwa 5 Gew.-%, von der mindestens einen elastomerhaltigen Lage des mindestens vierlagigen ersten Bandes umfasst. Soweit das mindestens vierlagige erste Band mindestens eine Haftvermittlungsschicht umfasst, umfasst die mindestens eine elastomerhaltige Lage des vierlagigen ersten Bandes bevorzugt mindestens einen polymeren Haftvermittler in einer Menge in einem Bereich zwischen etwa 0,05 Gew.-% und etwa 0,5 Gew.-%, bevorzugt in einem Bereich zwischen etwa 0,04 Gew.-% und etwa 0,5 Gew.-%, bezogen auf die Gesamtmenge des ersten Bandes. Besonders bevorzugt ist dabei der mindestens eine polymere Haftvermittler ausgewählt aus einer Gruppe der Polyethylene und/oder Polypropylene. Bei Vorsehung einer Trägerfolie aus Polyethylenen ist der mindestens eine polymere Haftvermittler bevorzugt ausgewählt aus einer Gruppe umfassend mindestens ein Polyethylen. Der mindestens eine polymere Haftvermittler kann bevorzugt als Masterbatch eingesetzt werden, dem bevorzugt Farbpigmente beigegeben sein können. Die Farbpigmente können dabei in Bezug auf den mindestens einen polymeren Haftvermittler in einer Menge von etwa 0,5 Gew.-% bis etwa 6 Gew.-%, bezogen auf die Gesamtmenge des eingesetzten polymeren Haftvermittlers, umfasst sein, wobei der Rest gebildet wird aus dem Polyethylen und/oder Polypropylen. Sämtliche der vorgenannten Gewichtsprozentangaben beziehen sich auf die Gesamtmenge des ersten Bandes.

In einer besonders bevorzugten Zusammensetzung umfasst die mindestens eine elastomerhaltige Lage des ersten Bandes mindestens einen Butylkautschuk in einer Menge in einem Bereich von etwa 40 Gew.-% bis etwa 66 Gew.-%, bevorzugt bis etwa 59 Gew.-%, ggf. mindestens ein EPDM in einer Menge in einem Bereich von etwa 6 Gew.-% bis etwa 14 Gew.-%, ein Prozessöl in einer Menge in einem Bereich von etwa 3 Gew.-% bis etwa 8 Gew.-%, als Tackifier ein Kohlenwasserstoffharz in einer Menge in einem Bereich von etwa 8 Gew.-% bis etwa 18 Gew.-%, mindestens einen Füllstoff in einer Menge in einem Bereich von etwa 12 Gew.-% bis etwa 23 Gew.-%, mindestens ein Antioxidationsmittel in einer Menge in einem Bereich von etwa 0,1 Gew.-%, bevorzugt von etwa 0,2 Gew.-%, bis etwa 0,4 Gew.-%, ggfs. Ruß in einer Menge in einem Bereich von etwa 4 Gew.-% bis etwa 8 Gew.-%, ggfs. ein Stabilisationsmittel in einer Menge in einem Bereich von etwa 0,1 Gew.-% bis etwa 0,7 Gew.-%, und das mindestens eine Vernetzungsmittel in einer Menge in einem Bereich von etwa 0,5 Gew.-% bis etwa 8 Gew.-%, bevorzugt in einem Bereich von etwa 0,8 Gew.-% bis etwa 3 Gew.-%. Sämtliche der vorgenannten Gewichtsprozentangaben beziehen sich auf die Gesamtmenge des ersten Bandes. Im Übrigen sind die vorgenannten Gewichtsprozentbereiche im Zusammenhang mit der konkreten Zusammensetzung solche, welche allgemein und außerhalb der genannten konkreten Zusammensetzung eingesetzt werden können.

Soweit in der vorliegenden Erfindung der Begriff "etwa" im Bezug auf Werte, Wertbereiche oder werthaltige Begriffe verwendet wird, ist hierunter dasjenige zu verstehen, was der Fachmann in dem gegebenen Zusammenhang als fachmännisch üblich ansehen wird. Insbesondere sind Abweichungen der angegebenen Werte, Wertbereiche oder werthaltigen Begriffe von +/- 10 %, bevorzugt +/- 5 %, von dem Begriff "etwa" umfasst.

Die vorliegende Erfindung betrifft weiterhin ein Verfahren zum Schutz von Produkten vor Korrosion mittels des erfindungsgemäßen Korrosionsschutzsystems, wie vorstehend definiert, wobei das mindestens eine Voranstrichmittel auf das zu schützende Produkt aufgetragen und nachfolgend mindestens ein mindestens vierlagiges erstes Band wie vorstehend definiert um das Produkt gewickelt bzw. auf dieses aufgetragen wird. Besonders bevorzugt ist bei dem erfindungsgemäßen Verfahren vorgesehen, dass bei oder nach der Wicklung bzw. der Auftragung des ersten und/oder zweiten Bandes die Temperatur erhöht wird, insbesondere die Temperatur des zu schützenden Produktes. Dies kann beispielsweise bei Rohranlagen gleich welcher Art dadurch erfolgen, dass durch das Rohrsystem erwärmtes Material geleitet wird. Das erfindungsgemäße Korrosionsschutzsystem weist den Vorteil auf, dass bei Inbetriebnahme des geschützten Produktes, und insbesondere dann, wenn höhere Temperaturen vorliegen, das heißt solche oberhalb von 80°C, eine weitergehende Vernetzung im Sinne einer Selbsthärtung erfolgt, wodurch das erfindungsgemäße Korrosionsschutzsystem eine noch bessere Korrosionsschutzwirkung erzielen kann. Besonders bevorzugt ist es bei dem erfindungsgemäßen Verfahren, wenn bei der Wicklung bzw. der Auftragung eine teilweise Überlappung des mindestens vierlagigen ersten und/oder zweiten Bandes vorgenommen wird. Weiter bevorzugt ist, wenn bei der Wicklung bzw. Auftragung das mindestens vierlagige erste und/oder das mindestens einlagige zweite Band unter Zug genommen wird, da hierdurch ein mechanisch besserer Halt auf dem zu schützenden Produkt erzielbar ist. Schließlich wird bei dem erfindungsgemäßen Verfahren bevorzugt nach Wicklung mit mindestens einem, aber auch zum Beispiel zwei ersten Bändern ein zweites Band um das Produkt gewickelt bzw. aufgetragen, wobei das zweite Band insbesondere der Vermittlung eines mechanischen Schutzes dient, wie bereits vorstehend im Zusammenhang mit dem erfindungsgemäßen Korrosionsschutzsystem beschrieben.

Die vorliegende Erfindung betrifft weiterhin ein Verfahren zur Herstellung eines mindestens vierlagigen ersten Bandes für ein Korrosionsschutzsystem wie vorstehend beschrieben, wobei in einem ersten Schritt eine Vormischung umfassend mindestens ein Elastomer, ausgewählt aus einer Gruppe umfassend (Block-)Co- und/oder Terpolymere mit mindestens einer Kohlenstoff-Kohlenstoff-Doppelbindung, bereitgestellt, wobei die Bereitstellung bevorzugt bei einer Temperatur der Vormischung in einem Bereich von etwa 10°C bis etwa 80°C erfolgt, und in einem zweiten Schritt, nachfolgend nach Abkühlung auf eine Temperatur in einem Bereich von etwa 10°C bis etwa 80°C, bevorzugt bei einer Temperatur in einem Bereich von 9°C bis 132°C, weiter bevorzugt bei einer Temperatur in einem Bereich von etwa 50°c bis etwa 120°C, mindestens ein Vernetzungsmittel, ausgewählt aus einer Gruppe umfassend mindestens ein Reaktionsharz, eingemischt wird. Die Vormischung wird hergestellt in einem üblichen Mischer/Kneter und dabei zum Zwecke der Homogenisierung auf eine Temperatur in einem Bereich von etwa 50°C bis etwa 220°C, bevorzugt eine Temperatur von etwa 150°C bis etwa 200°C erwärmt. Sie kann nachfolgend gelagert werden, bevorzugt bei einer Raumtemperatur von etwa 20°C. Die Temperatur der Vormischung zu Beginn der Mischung mit dem mindestens einen Vorvernetzungsmittel darf nicht mehr als 80°C betragen. Die Mischung im zweiten Schritt erfolgt bevorzugt derart, dass die bevorzugt auf Raumtemperatur abgekühlte Vormischung in einen vorgewärmten Mischer, bevorzugt auf eine Temperatur in einem Bereich von etwa 50°C bis etwa 80°C vorgewärmt, eingegeben wird und gleichzeitig oder nachfolgend das Vernetzungsmittel. Aufgrund der Reihenfolge der Zugabe des Vernetzungsmittels als auch aufgrund des bzw. der gewählten Temperaturbereiche wird so eine Mischung zur Herstellung des mindestens vierlagigen ersten Bandes erhalten, in welcher das mindestens eine Elastomer nicht vernetzt wird, das heißt eine Vernetzungsreaktion nicht in Gang gesetzt wird. Das mindestens eine Elastomer und das mindestens eine Vernetzungsmittel im erfindungsgemäßen Verfahren sind dabei solche, die vorstehend in Hinblick auf die Beschreibung des erfindungsgemäßen Korrosionsschutzsystems und des von diesem umfassten mindestens vierlagigen ersten Bandes definiert sind. Bevorzugt erfolgt eine Herstellung der Vormischung durch Zugabe sämtlicher möglicher und vorstehend beschriebener Inhaltsstoffe für die mindestens eine elastomerhaltige Lage des vierlagigen ersten Bandes mit Ausnahme des mindestens einen Vernetzungsmittels. Die Reihenfolge der Zugabe der verschiedenen sonstigen Bestandteile ist dabei nicht relevant. Sämtliche Bestandteile mit Ausnahme des mindestens einen Vernetzungsmittels zur Herstellung der Vormischung können dem Mischer als Mischung zugeführt werden oder aber einzeln eingegeben werden und erst im Mischer vermischt und dann zur Homogenisierung erwärmt werden. Besonders bevorzugt erfolgt die Erwärmung unter Mischung der Vormischung, insbesondere unter Einsatz üblicher Rührwerke, die dem angesprochenen Fachmann auf dem vorliegenden technischen Gebiet bekannt sind.

Bevorzugt wird nach Einmischung das Vernetzungsmittel für maximal etwa 5 min, bevorzugt etwa 1 min bis etwa 3,5 min gemischt, insbesondere durch Kneten. Die Mischung kann derart erfolgen, dass zunächst die Vormischung hergestellt und auf eine Temperatur von maximal 80°C abgekühlt wird, so dass auch der Mischer entsprechend vorgewärmt ist. In die Vormischung wird dann das mindestens eine Vernetzungsmittel eingemischt. So kann auch bei Lagerung der Vormischung verfahren werden, wobei diese bevorzugt bei Raumtemperatur von 20°C in den vorgewärmten Mischer gegeben wird.

Bevorzugt wird bei dem erfindungsgemäßen Verfahren nach Einmischung des mindestens einen Vernetzungsmittels die erhaltende Mischung von der oben angegebenen Mischungstemperatur auf eine Temperatur in einem Bereich von etwa 20°C bis etwa 80°C, bevorzugt auf eine Temperatur in einem Bereich von etwa 20°C bis etwa 60°C, abgekühlt. Besonders bevorzugt erfolgt die Abkühlung nach bevorzugt unverzüglicher Austragung der Mischung aus dem Mischer, bevorzugt auf Walzen. Durch den Abkühlungsschritt wird eine Vernetzung sicher unterbunden.

Die vorliegende Erfindung wird anhand der nachfolgenden Beispiele näher erläutert. Es sei jedoch an dieser Stelle vorausgeschickt, dass die in den Beispielen angegebenen Merkmale solche sind, die mit sämtlichen einzeln oder miteinander in der allgemeinen Beschreibung beschriebenen Merkmalen kombinierbar sind. Insbesondere ist die Zusammensetzung des ersten und zweiten Bandes und des Voranstrichmittels nur eine beispielhafte, und kann auch unterschiedlich sein, wobei beispielsweise das erste Band auch kein EPDM aufweisen kann.

Eine beispielhafte Zusammensetzung der elastomerhaltigen Lage des ersten Bandes weist 45 Gew.-% unvernetzten Butylkautschuk, erhalten durch Co-Polymerisation von Isobutylen und Isopropen, mit einer Mooney-Viskosität ML(1+8) bei 125°C von etwa 55 MU, 10 Gew.-% eines EPDM, hergestellt mit Ethyliden-Norbornen als Dien, 5 Gew.-% eines harthydrierten Prozessöls, 15 Gew.-% eines Kohlenwasserstoffharzes als Tackifier, 18 Gew.-% Talkum als Füllstoff mit einem Rückstand bei 60 µm in einer Siebanalyse gemäß DIN 66165 von 2 %, 5 Gew.-% Ruß und 2 Gew.-% eines Phenolharzes, nämlich eines Octylphenol-Formaldehyd-Harzes, als Vernetzungsmittel auf.

Ein in einem erfindungsgemäßen Korrosionsschutzsystem eingesetztes Voranstrichmittel wies 10 Gew.-% eines Butylkautschuks, identisch zu demjenigen im ersten Band eingesetzten, 15 Gew.-% eines Kohlenwasserstoffharzes als Tackifier, identisch zu dem im ersten Band genannten, 74,25 Gew.-% eines Lösemittels auf Benzinbasis, und 0,75 Gew.-% eines Katalysator/Co-Reagenzgemisches aus Zinnchlorid, Zinkchlorid und Triallylcyanurat auf.

Im Inneren der elastomerhaltigen Lage des ersten Bandes bei halber Stärke ist als Streckbremse eine Polyethylenfolie mit einer Stärke von 50 µm eingesetzt.

Eine weitere beispielhafte Zusammensetzung der elastomerhaltigen Lage des ersten Bandes weist 49 Gew.-% eines unvernetzten Butylkautschuks, erhalten durch Co-Polymerisation von Isobutylen und Isopren, mit einer Mooney-Viskosität ML(1+8) bei 125°C von etwa 55 MU und einem mittleren Molekulargewicht M_{w} von etwa 450.000, 6 Gew.-% eines harthydrierten Prozessöls, 14 Gew.-% eines Kohlenwasserstoffharzes als Tackifier, 18 Gew.-% Talkum als Füllstoff mit einem Rückstand bei 60 µm in einer Siebanalyse gemäß DIN 66165 von 2 %, 2 Gew.-% eines Phenolharzes, nämlich eines Octylphenol-Formaldehyd-Harzes als Vernetzungsmittel sowie 1 Gew.-% sonstiger Additive wie Antioxidatien und Dispergierhilfsmittel auf. Das erste Band umfasste dabei eine Trägerfolie aus elektronenstrahlvernetzbarem Polyethylen mittlerer Dichte in einer Menge von 97 Gew.-% und Farbpigmenten in einer Menge von 3 Gew.-%, jeweils bezogen auf die Gesamtmenge der Trägerfolie. Zwischen Trägerfolie und der Elastomer und Vernetzungsmittel enthaltenden Schicht wurde eine Haftvermittlungsschicht vorgesehen, welche 35 Gew.-% eines Polyethylens höherer Dichte, 15 Gew.-% eines EPDM, hergestellt mit 5-Ethyliden-2-Norbornen als Dien, und 50 Gew.-% eines vorvernetzten Butylkautschuks mit einer Mooney-Viskosität ML(1+3) bei 127°C von etwa 86 MU umfasste, wobei die Gew.-%-Angaben jeweils bezogen sind auf die Gesamtmenge der Haftvermittlungsschicht.

Ein alternatives, in einem erfindungsgemäßen Korrosionsschutzsystem einsetzbares Voranstrichmittel wies 9 Gew.-% eines unvernetzten Butylkautschuks, wie vorstehend in Zusammenhang mit den beiden beispielhaften Zusammensetzungen des ersten Bandes beschrieben, 18 Gew.-% eines Kohlenwasserstoffharzes als Tackifier, der nicht identisch mit dem Kohlenwasserstoffharz im Material des mindetens einen ersten Bandes sein muss, 70 Gew.-% eines Lösemittels auf Benzinbasis und 0,005 Gew.-% Zinkstearat als Katalysator auf, wobei der Rest durch ein Farbpigment in Form von Ruß gebildet wurde, wobei die Gew.-%-Angaben bezogen sind auf die Gesamtmenge des Voranstrichmittels.

Als zweites Band wurde ein solches eingesetzt, welches aus einem Polyethylen mit einer Stärke von 500 µm besteht, welches eine Schicht aus Butylkautschuk auf einer Seite aufwies, wobei zwischen der Polyethylenfolie und der Butylkautschuklage eine Haftvermittlungsschicht aus etwa 45 Gew.-% Butylkautschuk und etwa 55 Gew.-% Polyethylen vorlag.

Bei der Herstellung der vernetzungsmittelhaltigen Masse für das erste Band wird das Vernetzungsmittel im Herstellungsprozess erst bei etwa 80°C der Masse zugegeben.

Ein wie vorstehend definiertes Voranstrichmittel wurde auf ein Rohr mittels eines Pinsels aufgebracht und nachfolgend unter Zug das erste Band gemäß den beiden alternativen Anfertigungsformen schräg um das Rohr gewickelt, so dass stets eine Überlappung erfolgte. Anschließend wurde noch das zweite mechanische Schutzband mit derjenigen Seite, die die Butylkautschuklage aufwies, ebenfalls versetzt und überlappend über das erste Band gewickelt. Anschließend wurde durch das Rohr ein heißes Medium (wie z. B. Wasser oder Öl) mit einer Temperatur von etwa 80°C bis etwa 100°C geleitet. Bereits bei in Kontakt kommen des Voranstrichmittels mit dem ersten Band startet der Vernetzungsprozess aufgrund der Katalyse durch das eingesetzte Katalysatormittel, wobei die Vernetzung beschleunigt wird bei Durchleitung eines heißen Mediums durch das Rohr. Nach einigen Tagen waren das Voranstrichmittel, das erste Band und das zweite Band miteinander verwachsen und die Vernetzungsreaktion bzw. die Selbsthärtungsreaktion war nahezu abgeschlossen. Das solchermaßen aufgebrachte Korrosionsschutzsystem war für eine Dauerbetriebstemperatur von 100°C gemäß DIN EN 12068 geeignet.

Mit der vorstehenden Erfindung wird ein Korrosionsschutzsystem zur Verfügung gestellt, welches einerseits ausgelegt ist, auch bei hohen Temperaturen auf Produkten fest zu haften, und andererseits auch einfach und sicher verarbeitet und gelagert werden kann.

## Patentansprüche

1. Korrosionsschutzsystem umfassend ein mindestens vierlagiges erstes Band, umfassend mindestens eine äußere Lage mindestens eines Elastomers, ausgewählt aus einer Gruppe umfassend (Block-) Co- und/oder Terpolymere mit mindestens einer Kohlenstoff-Kohlenstoff-Doppelbindung, als auch mindestens ein Vernetzungsmittel, ausgewählt aus einer Gruppe umfassend mindestens ein Reaktionsharz, weiterhin umfassend mindestens eine Lage einer Trägerfolie, die auf beiden Seiten eine Haftvermittlungsschicht aufweist, wobei zwischen elastomerhaltiger Lage und der Trägerfolie eine Haftvermittlungsschicht angeordnet ist, wobei auf nur einer Seite der Trägerfolie die mindestens eine elastomerhaltige Lage angeordnet ist, wobei das Korrosionsschutzsystem weiterhin umfasst mindestens ein Voranstrichmittel, umfassend mindestens ein Katalysatormittel zur Aktivierung des Vernetzungsmittels.

2. Korrosionsschutzsystem gemäß Anspruch 1, **dadurch gekennzeichnet, dass** das mindestens eine Elastomer ausgewählt ist aus einer Gruppe umfassend Butylkautschuk, Ethylen-Propylen-Kautschuk und/oder Ethylen-Propylen-Dien-Kautschuk.

3. Korrosionsschutzsystem gemäß Anspruch 1 oder 2, **dadurch gekennzeichnet, dass** das Elastomer ausgewählt ist aus einer Gruppe umfassend Co- und/oder Terpolymere des Butylkautschuks aus Isobutylen und Isopren und/oder Terpolymere aus Ethylen und Propylen mit einem nichtkonjungierten Dien.

4. Korrosionsschutzsystem gemäß einem oder mehreren der vorhergehenden Ansprüche, **dadurch gekennzeichnet, dass** das Vernetzungsmittel ausgewählt ist aus einer Gruppe umfassend mindestens ein Phenolharz.

5. Korrosionsschutzsystem gemäß Anspruch 4, **dadurch gekennzeichnet, dass** das mindestens eine Phenolharz Hydroxymethyl-Gruppen aufweist.

6. Korrosionsschutzsystem gemäß einem der Ansprüche 4 oder 5, **dadurch gekennzeichnet, dass** das Phenolharz aus mindestens einem Phenol oder dessen Derivaten und mindestens einem Aldehyd, ausgewählt aus einer Gruppe umfassend Formaldehyd, Acetaldehyd, Benzaldehyd und/oder Acrolein, hergestellt ist.

7. Korrosionsschutzsystem gemäß einem oder mehreren der vorhergehenden Ansprüche, **dadurch gekennzeichnet, dass** das mindestens eine Katalysatormittel ausgewählt ist aus einer Gruppe umfassend Zinnchlorid, Zinkchlorid, Zinkbromid, Eisenchlorid, Antimonchlorid, Antimonbromid, Zinnbromid, Germaniumchlorid, Cobaltbromid, Nickelchlorid und/oder organischen Salzen von Zink und Zinn.

8. Korrosionsschutzsystem gemäß einem oder mehreren der vorhergehenden Ansprüche, **dadurch gekennzeichnet, dass** das mindestens vierlagige erste Band das mindestens eine Elastomer in einer Menge in einem Bereich von 36 Gew.-% bis 77 Gew.-%, bezogen auf die Gesamtmenge des Bandes, umfasst.

9. Korrosionsschutzsystem gemäß einem oder mehreren der vorhergehenden Ansprüche, **dadurch gekennzeichnet, dass** das mindestens vierlagige erste Band das mindestens eine Vernetzungsmittel in einer Menge in einem Bereich von 0,18 Gew.-% bis 11 Gew.-%, bezogen auf die Gesamtmenge des Bandes, umfasst.

10. Korrosionsschutzsystem gemäß einem oder mehreren der vorhergehenden Ansprüche, **dadurch gekennzeichnet, dass** das mindestens eine Voranstrichmittel das Katalysatormittel in einer Menge in einem Bereich von 0,0009 Gew.-% bis 5,5 Gew.-%, bezogen auf die Gesamtmenge des Voranstrichmittels, umfasst.

11. Korrosionsschutzsystem gemäß einem oder mehreren der vorhergehenden Ansprüche, **dadurch gekennzeichnet, dass** das mindestens vierlagige erste Band weiterhin mindestens einen Füllstoff, Ruß, mindestens ein Antioxidationsmittel, mindestens ein Kohlenwasserstoffharz und/oder mindestens ein Öl als Weichmacher umfasst.

12. Korrosionsschutzsystem gemäß einem oder mehreren der vorhergehenden Ansprüche, **dadurch gekennzeichnet, dass** das mindestens eine Voranstrichmittel weiterhin mindestens ein Elastomer gemäß einem der Ansprüche 1 bis 3 in einer Menge in einem Bereich von 3,6 Gew.-% bis 22 Gew.-%, bezogen auf die Gesamtmenge des Voranstrichmittels, umfasst.

13. Korrosionsschutzsystem gemäß einem oder mehreren der vorhergehenden Ansprüche, **dadurch gekennzeichnet, dass** das mindestens eine Voranstrichmittel weiterhin mindestens ein Co-Reagenz für das Katalysatormittel, ausgewählt aus einer Gruppe umfassend Triallylcyanurat, Triallylisocyanurat, Triallylphosphat und/oder Divinylbenzol, umfasst.

14. Korrosionsschutzsystem gemäß Anspruch 13, **dadurch gekennzeichnet, dass** das mindestens eine Voranstrichmittel das Co-Reagenz in einer Menge in einem Bereich von 0,009 Gew.-% bis 5,5 Gew.-%, bezogen auf die Gesamtmenge des Voranstrichmittels, umfasst.

15. Korrosionsschutzsystem gemäß einem oder mehreren der vorhergehenden Ansprüche, **dadurch gekennzeichnet, dass** das mindestens eine Voranstrichmittel weiterhin mindestens ein Lösemittel auf Benzinbasis und mindestens ein Kohlenwasserstoffharz umfasst.

16. Korrosionsschutzsystem gemäß einem oder mehreren der vorhergehenden Ansprüche, **dadurch gekennzeichnet, dass** das erste Band mindestens eine Lage einer Streckbremse umfasst.

17. Korrosionsschutzsystem gemäß einem oder mehreren der vorhergehenden Ansprüche, **dadurch gekennzeichnet, dass** dieses weiterhin ein zweites Band zur Vermittlung eines mechanischen Schutzes umfasst.

18. Verfahren zum Schutz von Produkten vor Korrosion mittels des Korrosionsschutzsystems gemäß einem oder mehreren der Ansprüche 1 bis 17, wobei das mindestens eine Voranstrichmittel auf das zu schützende Produkt aufgetragen und nachfolgend mindestens ein mindestens vierlagiges erstes Band gemäß einem der Ansprüche 1 bis 6, 8, 9, 11 und 16 um das Produkt gewickelt bzw. auf dieses aufgetragen wird.

19. Verfahren gemäß Anspruch 18, **dadurch gekennzeichnet, dass** nach Wicklung des mindestens einen mindestens vierlagigen ersten Bandes nochmalig das erste Band und/oder ein zweites Band um das Produkt gewickelt bzw. auf dieses aufgetragen wird.

20. Verfahren gemäß einem der Ansprüche 18 oder 19, **dadurch gekennzeichnet, dass** bei oder nachfolgend der Wicklung bzw. der Auftragung des ersten und/oder zweiten Bandes die Temperatur erhöht wird.

21. Verfahren gemäß einem oder mehreren der Ansprüche 18 bis 20, **dadurch gekennzeichnet, dass** bei der Wicklung bzw. Auftragung eine teilweise Überlappung des mindestens vierlagigen ersten und/oder zweiten Bandes vorgenommen wird.

22. Verfahren zur Herstellung eines mindestens vierlagigen ersten Bandes für ein Korrosionsschutzsystem gemäß einem der Ansprüche 1 bis 17, wobei in einem ersten Schritt eine Vormischung umfassend mindestens ein Elastomer, ausgewählt aus einer Gruppe umfassend (Block-)Co- und/oder Terpolymere mit mindestens einer Kohlenstoff-Kohlenstoff-Doppelbindung bereit gestellt und in einem zweiten Schritt bei einer Temperatur in einem Bereich von 9°C bis 132°C mindestens ein Vernetzungsmittel, ausgewählt aus einer Gruppe umfassend mindestens ein Reaktionsharz, eingemischt wird.

23. Verfahren gemäß Anspruch 22, **dadurch gekennzeichnet, dass** nach Einmischung des mindestens einen Vernetzungsmittels für maximal 5 min gemischt wird.

24. Verfahren gemäß Anspruch 23, **dadurch gekennzeichnet, dass** nachfolgend der Mischung eine Abkühlung auf Walzen erfolgt.

## Claims

1. Anti-corrosion system comprising an at least four-layered first tape, comprising at least one outer layer of at least one elastomer, selected from the group comprising (block-) co- and/or terpolymers with at least one carbon-carbon double bond, as well as at least one cross-linking agent, selected from a group comprising at least one reactive resin, furthermore comprising at least one layer of a carrier film, having an adhesive layer on both sides, wherein an adhesive layer is disposed between the layer containing elastomer and the carrier film, wherein the at least one layer containing elastomer is disposed only on one side of the carrier film, wherein the anti-corrosion system furthermore comprises at least one primer, comprising at least one catalyzing agent to activate the cross-linking agent.

2. Anti-corrosion system according to claim 1, **characterized in that** the at least one elastomer is selected from the group comprising butyl rubber, ethylene-propylene-rubber and/or ethylene-propylene-diene-rubber.

3. Anti-corrosion system according to claim 1 or 2, **characterized in that** the elastomer is selected from the group comprising co- and/or terpolymers of the butyl rubber consisting of isobutylene and isoprene and/or terpolymers consisting of ethylene and propylene with one unconjugated diene.

4. Anti-corrosion system according to one or more of the preceding claims, **characterized in that** the cross-linking agent is selected from a group comprising at least one phenol resin.

5. Anti-corrosion system according to claim 4, **characterized in that** the at least one phenol resin has hydroxymethyl groups.

6. Anti-corrosion system according to one of the claims 4 or 5, **characterized in that** the phenol resin is made of at least one phenol or its derivatives and at least one aldehyde, selected from a group comprising formaldehyde, acetaldehyde, benzaldehyde and/or acrolein.

7. Anti-corrosion system according to one or more of the preceding claims, **characterized in that** the at least one catalyzing agent is selected from a group comprising tin chloride, zinc chloride, zinc bromide, ferric chloride, antimony chloride, antimony bromide, tin bromide, germanium chloride, cobalt bromide, nickel chloride and/or organic salts of tin or zinc.

8. Anti-corrosion system according to one or more of the preceding claims, **characterized in that** the at least four-layered first tape comprises the at least one elastomer in a quantity ranging from 36% by weight to 77% by weight, based on total quantity of the tape.

9. Anti-corrosion system according to one or more of the preceding claims, **characterized in that** the at least four-layered first tape comprises the at least one cross-linking agent in a quantity ranging from 0.18% by weight to 11% by weight, based on the total quantity of the tape.

10. Anti-corrosion system according to one or more of the preceding claims, **characterized in that** the at least one primer comprises the catalyzing agent in a quantity ranging from 0.0009% by weight to 5% by weight, based on the total quantity of the primer.

11. Anti-corrosion system according to one or more of the preceding claims, **characterized in that** the at least four-layered first tape furthermore comprises at least one filler, carbon black, at least one antioxidant, at least one hydrocarbon resin and/or at least one process oil.

12. Anti-corrosion system according to one or more of the preceding claims, **characterized in that** the at least one primer furthermore comprises at least one elastomer according to one of the claims 1 to 3 in a quantity ranging from 3.6% by weight to 22 % by weight, based on the total quantity of the primer.

13. Anti-corrosion system according to one or more of the preceding claims, **characterized in that** the at least one primer furthermore comprises at least one co-reagent for the catalyzing agent, selected from a group comprising triallyl cyanurate, triallyl isocyanurate, triallyl phosphate and/or divinyl benzene.

14. Anti-corrosion system according to claim 13, **characterized in that** the at least one primer comprises the co-reagent in a quantity ranging from 0.009% by weight to 5.5% by weight, based on the total quantity of the primer.

15. Anti-corrosion system according to one or more of the preceding claims, **characterized in that** the at least one primer furthermore comprises at least one petrol-based solvent and at least one hydrocarbon resin.

16. Anti-corrosion system according to one or more of the preceding claims, **characterized in that** the first tape comprises at least one layer of an anti-jackknife break.

17. Anti-corrosion system according to one or more of the preceding claims, **characterized in that** it furthermore comprises a second tape to provide mechanical protection.

18. Method for the protection of products from corrosion by means of the anti-corrosion system according to one or more of the claims 1 to 17, wherein the at least one primer is applied to the product to be protected and, subsequently, at least one at least four-layered first tape is wrapped around the product or applied to the product according to one of the claims 1 to 6, 8, 9, 11 and 16.

19. Method according to claim 18, **characterized in that** after wrapping the at least one at least four-layered first tape, again the first tape and/or a second tape is wrapped around the product or applied to it.

20. Method according to one of the claims 18 or 19, **characterized in that** upon or after wrapping or applying the first and/or second tape, the temperature is raised.

21. Method according to one or more of the claims 18 to 20, **characterized in that** upon wrapping or applying, a partly overlapping of the at least four-layered first and/or second tape is made.

22. Method for producing an at least four-layered first tape for an anti-corrosion system according to one of the claims 1 to 17, wherein in a first step, a master batch comprising at least one elastomer, selected from a group comprising (block-) co- and/or terpolymers with at least one carbon-carbon-double bond, is provided, and in a second step, at a temperature ranging from 9°C to 132°C, at least one cross-linking agent, selected from a group comprising at least one reactive resin, is added.

23. Method according to claim 22, **characterized in that** after adding the at least one cross-linking agent, mixing is carried out for a maximum of five minutes.

24. Method according to claim 23, **characterized in that** subsequently, the mixture is cooled down on rolls.

## Revendications

1. Système anti-corrosion comprenant une première bande au moins à quatre couches qui comporte au moins une couche extérieure contenant au moins un élastomère choisi dans un groupe constitué par des copolymères (séquencés) et/ou des terpolymères ayant au moins une double liaison carbone-carbone, et au moins un agent de réticulation choisi dans un groupe comprenant au moins une résine réactive, comprenant en outre au moins une couche d'un film support qui comporte sur les deux cotés une couche d'adhésif, une couche d'adhésif étant disposée entre la couche contenant un élastomère et le film support, la couche contenant au moins un élastomère étant disposée sur un seul côté du film support, le système anti-corrosion comportant en outre au moins une couche d'apprêt contenant au moins un catalyseur destiné à activer l'agent de réticulation.

2. Système anti-corrosion selon la revendication 1, **caractérisé en ce qu'**au moins un élastomère est choisi dans un groupe contenant du caoutchouc butyle, du caoutchouc d'éthylène propylène et/ou du caoutchouc éthylène-propylène-diène.

3. Système anti-corrosion selon la revendication 1 ou 2, **caractérisé en ce que** l'élastomère est choisi dans un groupe constitué de copolymères et/ou de terpolymères de caoutchouc butyle, d'isobutylène et d'isoprène et/ou de terpolymères d'éthylène et de propylène avec un diène non conjugué.

4. Système anti-corrosion selon l'une ou plusieurs des précédentes revendications, **caractérisé en ce que** l'agent de réticulation est choisi dans un groupe comprenant au moins une résine phénolique.

5. Système anti-corrosion selon la revendication 4, **caractérisé en ce qu'**au moins une résine phénolique comporte des groupes hydroxyméthyle.

6. Système anti-corrosion selon l'une des revendications 4 ou 5, **caractérisé en ce que** la résine phénolique est fabriquée à partir d'au moins un phénol ou de ses dérivés et au moins d'un aldéhyde choisi dans un groupe comprenant du formaldéhyde, de l'acétaldéhyde, du benzaldéhyde et/ou de l'acroléine.

7. Système anti-corrosion selon l'une ou plusieurs des précédentes revendications, **caractérisé en ce qu'**au moins un catalyseur est choisi dans un groupe constitué de chlorure stannique, chlorure de zinc, bromure de zinc, chlorure de fer, chlorure d'antimoine, bromure d'antimoine, bromure stannique, chlorure de germanium, bromure de cobalt, chlorure de nickel et/ou de sels organiques de zinc et étain.

8. Système anti-corrosion selon l'une ou plusieurs des précédentes revendications, **caractérisé en ce que** la première bande au moins à quatre couches comprend au moins un élastomère en une quantité située dans une plage comprise entre 36 % en poids jusqu'à 77 % en poids, en rapport à la quantité totale de la bande.

9. Système anti-corrosion selon l'une ou plusieurs des précédentes revendications, **caractérisé en ce que** la première bande au moins à quatre couches comprend au moins un agent de réticulation en une quantité située dans une plage comprise entre 0,18 % en poids jusqu'à 11 % en poids, en rapport à la quantité totale de la bande.

10. Système anti-corrosion selon l'une ou plusieurs des précédentes revendications, **caractérisé en ce qu'**au moins une couche d'apprêt comprend le catalyseur en une quantité située dans une plage comprise entre 0,0009 % en poids jusqu'à 5,5 % en poids, en rapport à la quantité totale de la couche d'apprêt.

11. Système anti-corrosion selon l'une ou plusieurs des précédentes revendications, **caractérisé en ce que** la première bande au moins à quatre couches comprend en outre au moins une matière de remplissage, de la suie, au moins un antioxydant, au moins une résine d'hydrocarbure et/ou au moins une huile en tant que plastifiant.

12. Système anti-corrosion selon l'une ou plusieurs des précédentes revendications, **caractérisé en ce qu'**au moins une couche d'apprêt comprend en outre au moins un élastomère selon l'une des revendications 1 à 3 en une quantité située dans une plage comprise entre 3,6 % en poids jusqu'à 22 % en poids, en rapport à la quantité totale de la couche d'apprêt.

13. Système anti-corrosion selon l'une ou plusieurs des précédentes revendications, **caractérisé en ce qu'**au moins une couche d'apprêt comprend en outre au moins un co-réactif pour le catalyseur, choisi dans un groupe constitué de cyanurate de triallyle, isocyanurate de triallyle, phosphate de triallyle et/ou de divinylbenzène.

14. Système anti-corrosion selon la revendication 13, **caractérisé en ce qu'**au moins une couche d'apprêt comprend le co-réactif en une quantité située dans une plage comprise entre 0,009 % en poids jusqu'à 5,5 % en poids, en rapport à la quantité totale de la couche d'apprêt.

15. Système anti-corrosion selon l'une ou plusieurs des précédentes revendications, **caractérisé en ce qu'**au moins une couche d'apprêt comprend en outre au moins un solvant de type essence et au moins une résine d'hydrocarbure.

16. Système anti-corrosion selon l'une ou plusieurs des précédentes revendications, **caractérisé en ce que** la première bande comprend au moins une couche d'une résistance à l'étirement.

17. Système anti-corrosion selon l'une ou plusieurs des précédentes revendications, **caractérisé en ce que** celui-ci comprend en outre une deuxième bande pour transmission d'une protection mécanique.

18. Procédé destiné à la protection contre la corrosion au moyen d'un système anti-corrosion selon l'une ou plusieurs des revendications 1 à 17, au moins une couche d'apprêt étant appliquée sur le produit à protéger et ensuite, au moins une première bande au moins à quatre couches selon l'une des revendications 1 à 6, 8, 9, 11 et 16 étant enroulée autour du produit ou plus précisément appliquée sur celui-ci.

19. Procédé selon la revendication 18, **caractérisé en ce qu'**après l'enroulement d'au moins une première bande au moins à quatre couches, la première bande et/ou une deuxième bande est/sont une nouvelle fois enroulée(s) autour du produit et appliquée(s) sur celui-ci.

20. Procédé selon l'une des revendications 18 ou 19, **caractérisé en ce que** la température est augmentée lors ou après l'enroulement ou l'application de la première et/ou de la deuxième bande.

21. Procédé selon l'une ou plusieurs des revendications 18 à 20, **caractérisé en ce qu'**une superposition partielle de la première bande au moins à quatre couches et/ou de la deuxième bande est effectuée lors de l'enroulement ou de l'application.

22. Procédé destiné la fabrication d'une première bande au moins à quatre couches pour un système anti-corrosion selon l'une ou plusieurs des revendications 1 à 17, un pré-mélange comprenant au moins un élastomère, choisi dans un groupe constitué par des copolymères (séquencés) et/ou des terpolymères ayant au moins une double liaison carbone-carbone, étant fourni dans une première étape, et au moins un agent de réticulation choisi dans un groupe comprenant au moins une résine réactive, étant ajouté dans une deuxième étape à une température située dans une plage comprise entre 9°C et 132°C.

23. Procédé selon la revendication 22, **caractérisé en ce que** l'ajout d'au moins un agent de réticulation nécessite ensuite un mélange pendant 5 minutes maximum.

24. Procédé selon la revendication 23, **caractérisé en ce qu'**un refroidissement des rouleaux est effectué après le mélange.
